# FASCICULE DE BREVET EUROPEEN

(11) **EP 4 645 038 B1**
(45) Date de publication et mention de la délivrance du brevet: **02.09.2026**
(21) Numéro de dépôt: 25172447.2
(22) Date de dépôt: 24.04.2025
(51) Int. Cl.: G06F 3/01

(54) **INTERFACE HAPTIQUE À FRÉQUENCE DE MODULATION VARIABLE**
HAPTISCHE SCHNITTSTELLE MIT VARIABLER MODULATIONSFREQUENZ
HAPTIC INTERFACE WITH VARIABLE MODULATION FREQUENCY

(30) Priorité: 29.04.2024 FR 2404484
(43) Date de publication de la demande: 05.11.2025
(73) Titulaire: Commissariat à l'Energie Atomique et aux Energies Alternatives, 75015 Paris (FR)
(72) Inventeur: CASSET, Fabrice, 38054 GRENOBLE CEDEX 09 (FR); PERIS Y SABORIT, Laure, 38054 GRENOBLE CEDEX 09 (FR); RASCLE, Angélique, 38054 GRENOBLE CEDEX 09 (FR); PRAT, Christophe, 38054 GRENOBLE CEDEX 09 (FR); GERFAULT, Laurent, 38054 GRENOBLE CEDEX 09 (FR); BRULAIS, Sébastien, 38054 GRENOBLE CEDEX 09 (FR)
(74) Mandataire: Regimbeau

(56) Documents cités:
- EP-B1- 4 006 698
- US-A1- 2018 151 035
- US-A1- 2018 181 203
- US-A1- 2018 304 310
- US-A1- 2021 162 457
- US-A1- 2022 252 550
- TOM CARTER ET AL: "UltraHaptics", PROCEEDINGS OF THE 26TH ANNUAL ACM SYMPOSIUM ON USER INTERFACE SOFTWARE AND TECHNOLOGY, UIST '13, 1 January 2013 (2013-01-01), New York, New York, USA, pages 505 - 514, XP055159967, ISBN: 978-1-45-032268-3, DOI: 10.1145/2501988.2502018

## Description

### DOMAINE TECHNIQUE

Le domaine de l'invention est celui des interfaces homme-machine utilisant des effets haptiques qui permettent à un utilisateur d'interagir avec l'environnement par le sens du toucher. L'invention concerne plus particulièrement les interfaces générant un champ acoustique à même de fournir une sensation tactile à distance.

### TECHNIQUE ANTÉRIEURE

L'haptique dit « mid-air » recrée la sensation de toucher à distance, grâce à un réseau de haut-parleurs à ultrasons qui font vibrer la peau d'un utilisateur. Cette technologie peut permettre par exemple une meilleure immersion dans les jeux vidéo, notamment via l'adjonction d'effets haptiques lors de l'utilisation de lunettes de réalité virtuelle (VR), réalité augmentée (AR) ou réalité mixte (MR). Elle peut également permettre la fonctionnalisation des tableaux de bord automobiles, le conducteur disposant d'une information haptique tout en gardant son attention sur la route.

L'haptique mid-air utilise une matrice de transducteurs ultrasonores excités à une fréquence supérieure à 20kHz, dite fréquence porteuse, pour générer une pluralité d'ondes ultrasonores lesquelles, non audibles, sont focalisées en une zone de l'espace prédéfinie en jouant sur le déphasage des porteuses, générant ainsi une pression acoustique. Les porteuses sont modulées à basse fréquence (typiquement entre 10Hz et 1000Hz) pour que l'effet soit perceptible par les mécanorécepteurs humains.

Le brevet EP 4 006 698 B1 décrit une interface haptique mid-air qui présente plusieurs sous-matrices de transducteurs ultrasonores excitées par des fréquences porteuses différentes pour générer différents effets haptiques. Cette interface exploite une seule fréquence de modulation des porteuses.

La demande de brevet US 2018/0181203 A1 divulgue une interface haptique mid-air dont les fréquences porteuses sont identiques, mais dont les fréquences de modulation sont différentes, afin de solliciter des récepteurs tactiles différents sensibles à des fréquences d'excitation différentes et créer ainsi un effet haptique multipoint. Cette demande de brevet décrit plus particulièrement des fréquences de modulation fixes à 50Hz et à 200Hz permettant à un premier point focal d'être excité/non-excité toutes les 20 ms et à un deuxième point focal d'être excité/non-excité toutes les 5 ms. En d'autres termes, cette demande de brevet divulgue une modulation d'amplitude des porteuses avec pour signal modulant un signal carré de rapport cyclique 50% et de fréquence 50Hz ou 200HZ.

### EXPOSÉ DE L'INVENTION

L'invention a pour objectif de proposer une interface haptique améliorée apte à procurer des ressentis plus complexes.

A cet effet, l'invention propose un contrôleur destiné au pilotage d'un ensemble de transducteurs ultrasonores apte à générer un champ acoustique fournissant une sensation tactile à distance, comprenant :
- une interface d'entrée configurée pour recevoir une commande de délai et une commande de modulation ;
- une voie dédiée à chaque transducteur ultrasonore, chaque voie comprenant un circuit de commande et un générateur d'un signal d'actionnement du transducteur ultrasonore apte à être contrôlé par un signal logique de commande généré par le circuit de commande pour délivrer des impulsions de tension avec un retard respectant la commande de délai et une modulation exploitant un signal modulant dont la fréquence de modulation qui est susceptible de prendre plusieurs valeurs est fixée par la commande de modulation ;
- une interface de sortie configurée pour fournir les signaux d'actionnement aux transducteurs ultrasonores.

Certains aspects préférés mais non limitatifs de ce contrôleur sont les suivants :
- il comprend un unique circuit générateur de signal modulant contrôlé par la commande de modulation, de sorte que la commande de modulation fixe une fréquence de modulation commune à l'ensemble des transducteurs ultrasonores ;
- les transducteurs ultrasonores sont répartis en plusieurs sous-ensembles de transducteurs ultrasonores et le contrôleur comprend un circuit générateur de signal modulant par sous-ensemble de transducteurs ultrasonores, de sorte que la commande de modulation fixe une fréquence de modulation commune aux transducteurs d'un sous-ensemble ;
- chaque voie comprend un circuit générateur de signal modulant ;
- le circuit de commande associé à chaque transducteur ultrasonore est configuré pour générer le signal logique de commande de manière à réaliser une modulation de largeur d'impulsion du signal d'actionnement du transducteur ultrasonore ;
- la modulation de largeur d'impulsion vient contrôler un rapport cyclique du signal d'actionnement à partir d'une amplitude du signal modulant ;
- la modulation de largeur d'impulsion vient contrôler le rapport cyclique du signal d'actionnement à partir d'une amplitude du signal modulant lors d'un front montant du signal d'actionnement.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma représentant un système de fourniture d'une sensation tactile à distance conforme à l'invention ;
- la figure 2 illustre le principe de focalisation des ondes ultrasonores en jouant sur le déphasage ;
- la figure 3 illustre la possibilité de générer différentes sensations tactiles en venant varier la fréquence de modulation ;
- la figure 4 est un schéma d'une voie d'un contrôleur d'un système de fourniture d'une sensation tactile à distance conforme à l'invention ;
- la figure 5 est un schéma illustrant un pilotage des transducteurs au moyen de n voies avec pour chacune une modulation variable indépendante ;
- la figure 6 est un schéma illustrant un pilotage des transducteurs au moyen de n voies avec des modulation variables communes à plusieurs voies.

### EXPOSÉ DÉTAILLÉ DE MODES DE RÉALISATION PARTICULIERS

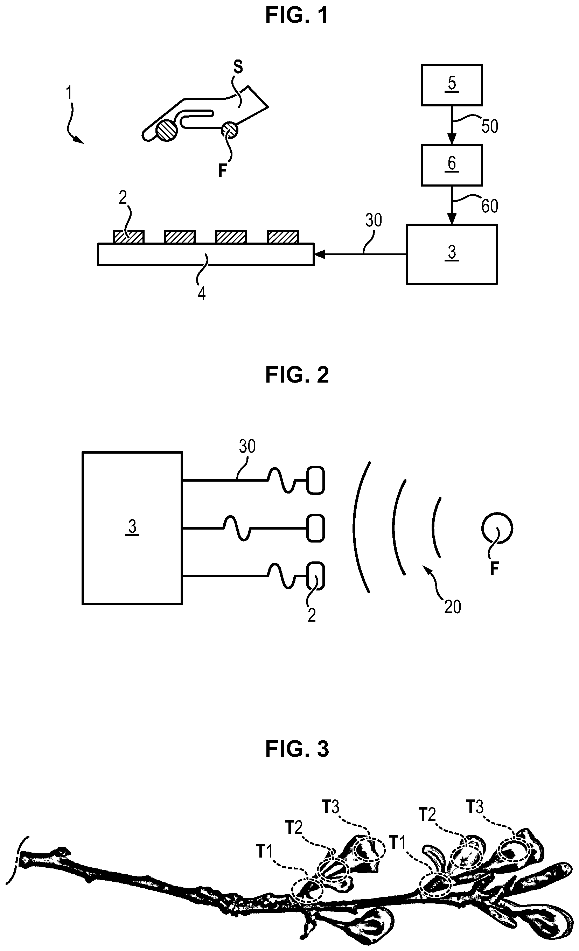

La figure 1 illustre un exemple de système 1 de fourniture d'une sensation tactile à distance (ou interface haptique) selon l'invention. Ce système 1 comprend un ensemble de transducteurs ultrasonores 2, par exemple portés par un même support 4, apte à générer un champ acoustique fournissant une sensation tactile à distance.

Le système 1 comprend par ailleurs une unité de traitement de données 6, par exemple un ordinateur personnel, en charge d'élaborer des commandes 60 en fonction de la position et de l'effet à générer. Ces commandes 60 sont fournies à un contrôleur 3 en charge du pilotage de l'ensemble des transducteurs. Le contrôleur 3 est plus particulièrement configuré pour mettre en forme les signaux 30 envoyés aux transducteurs 2 afin de générer avec les ondes ultrasonores émises par les transducteurs une pression acoustique détectable tactilement sur une surface S, définie par exemple par la paume et/ou les doigts d'une main, en une zone focale F. Le contrôleur 3 peut être un circuit logique programmable tel qu'un FPGA. Les commandes 60 peuvent lui être fournies sur une liaison « UART over USB »

Dans l'exemple considéré, le système 1 comporte en outre un système de détection 5 configuré pour détecter la position de la surface S à stimuler tactilement et transmettre des données de localisation correspondantes 50 à l'unité de traitement de données 6.

Le système de détection 5 peut être réalisé avec une partie des transducteurs 2 qui détectent la position de la surface S à partir de la captation du signal ultrasonore qui se réverbère sur la surface S. Des transducteurs à la fréquence adaptée pour une telle captation peuvent être dédiés à cette fonction. Alternativement, n'importe quel autre système de détection adapté peut être utilisé, par exemple un système de détection optique.

Le système 1 est de type mid-air car la surface S à stimuler tactilement se situe à distance des transducteurs 2, et la zone focale F se situe dans l'air à distance des transducteurs. Les pressions acoustiques détectables tactilement sont générées suivant un principe dit de « focalisation électronique acoustique » illustré de manière schématique à la figure 2. Pour concentrer les ondes ultrasonores 20 émises par les transducteurs 2 en une zone focale F prédéfinie, le circuit de commande 3 envoie de façon connue en soi aux transducteurs 2 des signaux alternatifs complexes 30 afin d'introduire des déphasages entre les différentes ondes ultrasonores émises par les transducteurs 2 actionnés, générant ainsi la forme de front d'onde voulue, cette forme de front d'onde résultant en une augmentation de la pression acoustique dans la zone focale F.

Dans un exemple de réalisation, les transducteurs 2 sont de type piézoélectrique micro-usiné (PMUT pour « Piezoelectric Micromachined Ultrasonic Transducer »). D'autres types de transducteurs peuvent être indifféremment utilisés, par exemple des actionneurs électromagnétiques.

Un PMUT unitaire travaillant à une fréquence de 100 kHz sous 5V génère une pression acoustique de l'ordre de 0.15 Pa à 30 cm. En considérant une tension de 48V et en faisant l'hypothèse d'une pression acoustique augmentant linéairement avec la tension, une pression acoustique de l'ordre de 1.44 Pa peut être atteinte avec un tel PMU unitaire.

Le seuil pour ressentir un effet haptique est autour de 200 Pa. En additionnant linéairement les pressions acoustiques, il résulte qu'il faut une matrice constituée de 139 transducteurs pour obtenir un effet haptique à 30 cm.

A titre d'exemple, le rayon du PMUT considéré est de l'ordre de 400 µm. En effet, pour une fréquence donnée, le rayon est lié à la raideur de la membrane du PMUT, liée à son épaisseur et ses matériaux constitutifs. En considérant un écart entre membranes de 300 µm, qui est un écart suffisant pour permettre une solidité de la matrice tout en gardant des membranes proches les unes des autres, il résulte une matrice haptique de l'ordre de 1.5*1.5 cm² pour 139 transducteurs.

Dans le cadre de l'invention, l'ensemble des transducteurs compte un nombre minimal de transducteurs pour obtenir un effet haptique. Ce nombre minimal est de 139 dans l'exemple ici considéré. Un nombre supérieur de transducteurs est bien entendu possible, notamment afin d'assurer un effet à plus grande distance. En particulier, les transducteurs peuvent être répartis entre plusieurs sous-ensembles de transducteurs, chaque sous-ensemble étant constitué d'un nombre de transducteurs supérieur audit nombre minimal. En exploitant plusieurs sous-ensembles, il est possible de créer plusieurs effets simultanés et donc de proposer une interface haptique multipoint. Par exemple, deux doigts d'un utilisateur peuvent explorer deux zones indépendamment l'un de l'autre. En outre, la répartition des transducteurs dans les sous-ensembles peut être évolutive, par exemple en fonction de la localisation de la zone focale F.

Les transducteurs peuvent ainsi former un ensemble unique de transducteurs ou au contraire former plusieurs sous-ensembles de transducteurs. Afin que la pression acoustique générée soit perceptible au toucher, une modulation basse fréquence des porteuses est mise en œuvre. Les transducteurs de l'ensemble unique ont leurs signaux d'actionnement modulés à une même fréquence de modulation. De même, les transducteurs d'un sous-ensemble de transducteurs ont leurs signaux d'actionnement modulés à une même fréquence de modulation. En revanche, différentes fréquences de modulation peuvent être associées aux différents sous-ensembles.

Dans le cadre de l'invention, cette même fréquence de modulation est variable. Il est de la sorte possible d'obtenir des effets haptiques différents en fonction de la fréquence de modulation, notamment différents effets de texture.

La figure 3 illustre un effet haptique complexe qu'il est possible de créer à l'aide d'une fréquence de modulation variable. Pour une zone focale de type T1, les signaux d'actionnement sont modulés avec une fréquence de modulation basse, avantageusement entre 10 et 200 Hz, procurant la sensation de toucher du bois. Pour une zone focale de type T2, les signaux d'actionnement sont modulés avec une fréquence de modulation intermédiaire, avantageusement entre 200 Hz et 400 Hz, procurant la sensation de toucher une feuille. Enfin, pour une zone focale de type T3, les signaux d'actionnement sont modulés avec une fréquence de modulation haute, avantageusement entre 400 et 800 Hz, procurant la sensation de toucher un bourgeon.

On notera que le changement de fréquence de modulation peut être discret ou continu. En variant progressivement d'une fréquence à une autre, il est possible de générer un effet progressif, comme par exemple un effet procurant une sensation de plus en plus rugueuse.

Un système 1 de fourniture d'une sensation tactile à distance selon l'invention, couplé avec un système de détection 5, peut fonctionner selon les étapes suivantes.

Le système 1 est tout d'abord en veille, en l'absence d'un utilisateur (doigt, main ou partie du corps sur laquelle générer un effet haptique) dans le champ de détection du système de détection 5.

Par la suite, le système de détection 5 détecte la présence d'une surface S d'un utilisateur dans le champ de détection et localise le (ou les) endroit(s) où doit être généré(s) le (ou les) effet(s) haptique(s).

L'unité de traitement de données 6 met alors en œuvre des algorithmes permettant de déterminer les commandes à adresser aux transducteurs 2 en fonction de la position et de l'effet à générer. En particulier, l'algorithme traduit l'effet à générer en une fréquence de modulation adaptée, par exemple une fréquence de modulation entre 10 et 200 Hz pour donner la sensation d'un matériau rugueux, une fréquence de modulation entre 200 et 400 Hz pour donner la sensation d'un matériau plus lisse et une fréquence de modulation entre 400 et 800 Hz pour donner la sensation d'un matériau encore plus lisse.

L'unité de traitement de données 6 vient ici déterminer une commande de délai qui est fonction de la position de la zone focale F et une commande de modulation qui est fonction de l'effet à générer dans cette zone F. La commande de délai peut prendre la forme d'une table de délais indiquant le délai à appliquer à chacun des signaux d'actionnement. La commande de modulation peut prendre la forme d'une table de pulsations indiquant la fréquence de modulation de chacun des signaux d'actionnement.

Ces commandes de délai et de modulation sont fournies au contrôleur 3 lequel va en réponse mettre en forme les signaux d'actionnement des transducteurs de façon à générer l'effet haptique désiré dans la zone focale F. La commande de délai est exploitée pour appliquer un déphasage aux signaux d'actionnement afin de focaliser les ondes ultrasonores au niveau de la zone focale. La commande de modulation est quant à elle exploitée pour moduler les signaux d'actionnement par un signal modulant dont la fréquence de modulation, qui est susceptible de prendre plusieurs valeurs, est réglée par la commande de modulation.

Lorsque l'utilisateur se retire du champ de détection du système de détection 5, le système se remet en veille.

Le contrôleur 3 dispose ainsi d'une interface d'entrée pour recevoir la commande de de délai et la commande de modulation élaborées par l'unité de traitement de données 6.

Le contrôleur 3 est du type multi-voies avec une voie dédiée à chaque transducteur ultrasonore. Chacune des voies comprend un générateur du signal d'actionnement du transducteur correspondant, ce signal d'actionnement étant retardé conformément à la commande de délai et modulé conformément à la commande de modulation. Le contrôleur 3 dispose en outre d'une interface de sortie pour fournir les signaux d'actionnement ainsi générés aux transducteurs ultrasonores 2.

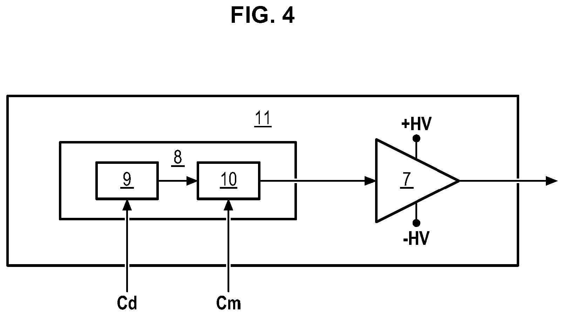

La figure 4 représente schématiquement une telle voie 11 du contrôleur 3. Cette voie 11 comprend un générateur 7 du signal d'actionnement du transducteur associé à la voie et un circuit de commande 8. Le générateur 7 est un générateur d'impulsions de tension qui est piloté par un signal logique de commande élaboré par le circuit de commande 8. Lorsque le signal logique de commande est à un premier état, le générateur 7 fournit une tension de niveau haut +HV, et, lorsque le signal logique de commande est à un deuxième état, le générateur 7 fournit une tension de niveau bas -HV. A titre d'exemple, les tensions +HV et -HV sont respectivement de 3V et de 0V.

Le circuit de commande 8 est configuré pour appliquer le signal logique de commande au générateur 7 conformément à la commande de délai Cd et à la commande de modulation Cm. Le signal logique de commande permet au générateur 7 de délivrer des impulsions de tension avec un retard respectant la commande de délai et une modulation exploitant un signal modulant dont la fréquence de modulation, qui est susceptible de prendre plusieurs valeurs, est fixée par la commande de modulation.

Le circuit de commande comprend une unité d'ajustement de délai 9 pilotée par la commande de délai Cd (par exemple via le délai reporté dans une table de délais pour le transducteur et la voie considérés) et une unité de modulation d'impulsion 10 pilotée par la commande de modulation Cm (par exemple via la fréquence de modulation reportée dans une table de pulsations pour le transducteur et la voie considérés).

Dans une réalisation possible, l'unité de modulation d'impulsion 10 permet de réaliser une modulation de largeur d'impulsion du signal d'actionnement du transducteur ultrasonore. Par exemple, l'unité d'ajustement de délai 9 fournit une indication de début d'impulsion (par exemple selon un front montant) et l'unité de modulation d'impulsion 10 fournit une indication de durée d'impulsion. Notamment, la modulation de largeur d'impulsion vient contrôler un rapport cyclique du signal d'actionnement à partir d'une amplitude du signal modulant dont la fréquence de modulation est réglée par la commande de modulation. Par exemple, la durée de l'impulsion est fonction de l'amplitude du signal modulant lors du front montant de l'impulsion.

Sur le plan électronique, la modulation de largeur d'impulsion présente l'avantage de ne pas nécessiter de manipuler de signaux analogiques. Le contrôleur émet un signal qui va avoir comme état 0 ou 1 (par exemple 0V et 3V). Ce signal est facile à converti r en tension de contrôle des transducteurs de plusieurs dizaines de volts. Pour une modulation d'amplitude, il est nécessaire de réaliser une conversion numérique-analogique et une amplification analogique, ce qui s'avère coûteux en énergie et en prix.

Le contrôleur 3 comprend par ailleurs au moins un circuit générateur de signal modulant contrôlé par la commande de modulation Cm pour délivrer un signal modulant dont la fréquence de modulation est réglée par la commande de modulation Cm.

Lorsque l'ensemble de transducteurs forme un ensemble unique, le contrôleur 3 peut ainsi comprendre un unique circuit générateur de signal modulant contrôlé par la commande de modulation Cm. Les transducteurs de l'ensemble unique sont ici modulés à la même fréquence de modulation (dont la valeur variable est fixée par la commande de modulation). La commande de modulation fixe ici une fréquence de modulation commune à l'ensemble des transducteurs ultrasonores.

Lorsque l'ensemble de transducteurs est réparti en plusieurs sous-ensembles de transducteurs, le contrôleur peut comprendre un circuit générateur de signal modulant par sous-ensemble. Les transducteurs d'un sous-ensemble sont ici modulés à la même fréquence de modulation (dont la valeur variable est fixée par la commande de modulation) mais les différents sous-ensembles peuvent être modulés à des fréquences de modulation différentes. La commande de modulation fixe ici une fréquence de modulation commune aux transducteurs d'un sous-ensemble.

Un multiplexeur combinatoire peut être utilisé pour router la valeur calculée par un circuit générateur de signal modulant aux voies du sous-ensemble de transducteurs correspondants.

Alternativement, un multiplexage temporel peut être mis en œuvre selon lequel chaque circuit générateur de signal modulant émet tout à tour son identifiant et la valeur qu'il a calculée sur un bus commun, et chaque voie, préalablement associée à l'un des générateurs, reconnaît l'adresse de ce dernier et enregistre la valeur calculée correspondante.

Le multiplexeur combinatoire nécessite d'interfacer les éléments entre eux, en particulier de connecter tous les registres des voies avec tous les registres de sortie des générateurs de signaux modulants. Lorsqu'on augmente le nombre de voies, ce routage se complexifie énormément, et le multiplexeur combinatoire devient difficilement routable. En profitant de la différence entre la fréquence de travail (qui doit être rapide, autour de la centaine de MHz, pour permettre le réglage très fin des délais) et la fréquence de mise à jour des valeurs des rapports cyclique (qui est la fréquence de porteuse, soit quelques dizaines de kHz), il est possible de mettre en place un multiplexage temporel qui est plus lent, puisque les valeurs sont émises les unes à la suite des autres, mais comme il est cadencé par la fréquence de travail, il est suffisamment rapide pour être réalisé durant une période de la porteuse.

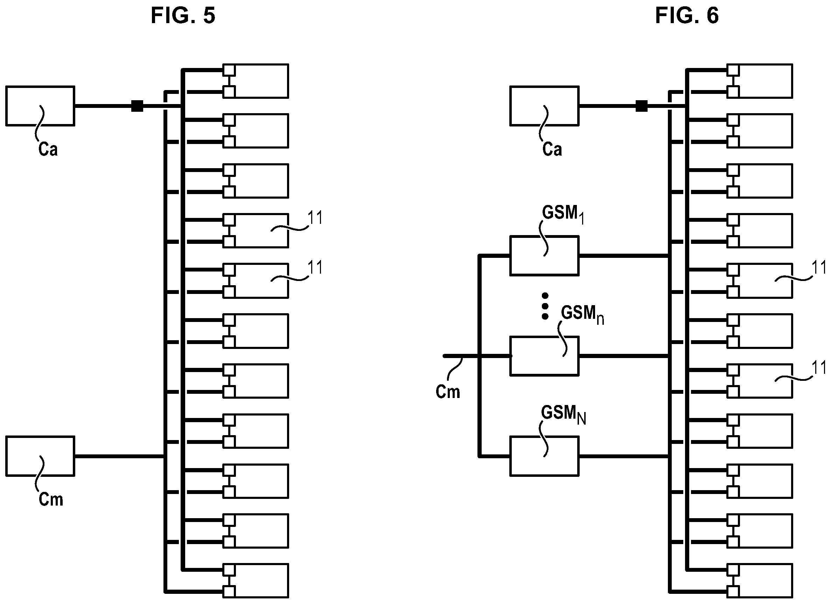

Dans la mesure où la répartition des transducteurs dans les sous-ensembles peut être évolutive, il peut également être prévu que le contrôleur 3 comprenne un circuit générateur de signal modulant par voie, les transducteurs étant alors modulés de façon indépendante. La figure 5 représente à cet égard un schéma de principe du calculateur 3 où chaque voie 11 intègre son propre calculateur de signal modulant. Le calculateur 3 réalise ici une mise en forme des signaux d'actionnement avec modulation variable indépendante.

La figure 6 représente quant à elle un schéma de principe du contrôleur 3 pour le cas précédent à générateur de signal modulant GSM₁, GSMₙ, GSM_{N} par sous-ensemble (ou groupe) de transducteurs. Le calculateur 3 réalise ici une mise en forme des signaux d'actionnement avec modulation variable par groupe. Les générateurs de signal modulant GSM₁, GSMₙ, GSM_{N} ne sont pas ici intégrés au sein des voies 11.

Dans une réalisation privilégiée, le signal modulant est un sinus et le ou les générateurs délivrent un sinus dont la fréquence de modulation est celle fixée par la commande de modulation. Le ou les générateurs de signal modulant peuvent prendre la forme de tables de sinus précalculés pour différentes fréquences de modulation. Alternativement, le ou les générateurs de signal modulant peuvent être des circuits calculateurs de sinus, tels que des circuits CORDIC (sigle de COordinate Rotation Digital Computer, « calcul numérique par rotation de coordonnées ») ou des tables de correspondance LUT (sigle de « Look-Up Table »).

L'invention s'étend à un dispositif de génération d'un champ acoustique fournissant une sensation tactile à distance, comprenant le contrôleur 3 et un convertisseur de tension apte à convertir les signaux d'actionnement fournis par le contrôleur en des signaux de tension plus élevée. À titre d'exemple, le convertisseur de tension est apte à délivrer une impulsion d'amplitude 48V à partir d'une impulsion d'amplitude 3V. Le convertisseur de tension a par exemple une topologie en demi-pont.

L'invention n'est pas limitée au contrôleur, dispositif et système précédemment décrits mais s'étend également à un procédé de pilotage d'un ensemble de transducteurs ultrasonores apte à générer un champ acoustique fournissant une sensation tactile à distance, comprenant :
- la réception d'une commande de délai et d'une commande de modulation ;
- la génération de signaux d'actionnement des transducteurs sous la forme d'impulsions de tension présentant un retard respectant la commande de délai et une modulation exploitant un signal modulant dont la fréquence de modulation qui est susceptible de prendre plusieurs valeurs est fixée par la commande de modulation ;
- la fourniture des signaux d'actionnement modulés aux transducteurs ultrasonores.

L'invention vise également un produit programme d'ordinateur comprenant des instructions qui, lorsque le programme est exécuté par un ordinateur, conduisent celui-ci à mettre en œuvre ce procédé.

## Revendications

1. Contrôleur (3) destiné au pilotage d'un ensemble de transducteurs ultrasonores (2) apte à générer un champ acoustique fournissant une sensation tactile à distance, comprenant :
- une interface d'entrée configurée pour recevoir une commande de délai (Cd) et une commande de modulation (Cm) ;
- une voie (11) dédiée à chaque transducteur ultrasonore, chaque voie (11) comprenant un circuit de commande (8) et un générateur (7) d'un signal d'actionnement du transducteur ultrasonore apte à être contrôlé par un signal logique de commande généré par le circuit de commande (8) pour délivrer des impulsions de tension avec un retard respectant la commande de délai (Cd) et une modulation exploitant un signal modulant dont la fréquence de modulation qui est susceptible de prendre plusieurs valeurs est fixée par la commande de modulation (Cm) ;
- une interface de sortie configurée pour fournir les signaux d'actionnement aux transducteurs ultrasonores (2).

2. Contrôleur selon la revendication 1, comprenant un unique circuit générateur de signal modulant contrôlé par la commande de modulation (Cm) de sorte que la commande de modulation fixe une fréquence de modulation commune à l'ensemble des transducteurs ultrasonores.

3. Contrôleur selon la revendication 1, dans lequel les transducteurs ultrasonores sont répartis en plusieurs sous-ensembles de transducteurs ultrasonores et qui comprend un circuit générateur de signal modulant par sous-ensemble de transducteurs ultrasonores de sorte que la commande de modulation fixe une fréquence de modulation commune aux transducteurs d'un sous-ensemble.

4. Contrôleur selon la revendication 3, dans lequel chaque voie (11) comprend un circuit générateur de signal modulant.

5. Contrôleur selon l'une des revendication 1 à 4, dans lequel le circuit de commande associé à chaque transducteur ultrasonore est configuré pour générer le signal logique de commande de manière à réaliser une modulation de largeur d'impulsion du signal d'actionnement du transducteur ultrasonore.

6. Contrôleur selon la revendication 5, dans lequel la modulation de largeur d'impulsion vient contrôler un rapport cyclique du signal d'actionnement à partir d'une amplitude du signal modulant.

7. Contrôleur selon la revendication 6, dans lequel la modulation de largeur d'impulsion vient contrôler le rapport cyclique du signal d'actionnement à partir d'une amplitude du signal modulant lors d'un front montant du signal d'actionnement.

8. Dispositif de génération d'un champ acoustique fournissant une sensation tactile à distance, comprenant un contrôleur selon l'une des revendications 1 à 7 et un convertisseur de tension apte à convertir les signaux d'actionnement en des signaux de tension plus élevée.

9. Système (1) de fourniture d'une sensation tactile à distance, comprenant :
- un ensemble de transducteurs ultrasonores (2) ;
- un détecteur (5) configuré pour détecter la position relativement aux transducteurs d'une surface d'un utilisateur à stimuler tactilement ;
- une unité de traitement de données (6) configuré pour générer une commande de délai et une commande de modulation en fonction de la position de la surface de l'utilisateur ainsi détectée ;
- un contrôleur selon l'une des revendications 1 à 7.

10. Procédé de pilotage au moyen d'un contrôleur selon l'une des revendications 1 à 7 d'un ensemble de transducteurs ultrasonores apte (2) à générer un champ acoustique fournissant une sensation tactile à distance, comprenant :
- la réception, par l'interface d'entrée du contrôleur, d'une commande de délai (Cd) et d'une commande de modulation (Cm) ;
- la génération, par chaque voie dédiée à l'un des transducteurs ultrasonores, d'un signal d'actionnement du transducteur sous la forme d'impulsions de tension présentant un retard respectant la commande de délai et une modulation exploitant un signal modulant dont la fréquence de modulation qui est susceptible de prendre plusieurs valeurs est fixée par la commande de modulation ;
- la fourniture, par l'interface de sortie, des signaux d'actionnement modulés aux transducteurs ultrasonores.

11. Produit programme d'ordinateur comprenant des instructions qui, lorsque le programme est exécuté par un ordinateur, comprenant le contrôleur des revendications 1 à 7, conduisent celui-ci à mettre en œuvre le procédé selon la revendication 10.

## Patentansprüche

1. Steuereinheit (3), die zur Ansteuerung einer Anordnung von Ultraschallwandlern (2) bestimmt ist, die geeignet ist, ein akustisches Feld zu erzeugen, das aus der Ferne eine taktile Empfindung bereitstellt, umfassend:
- eine Eingangsschnittstelle, die so konfiguriert ist, dass sie einen Verzögerungsbefehl (Cd) und einen Modulationsbefehl (Cm) empfängt;
- einen Kanal (11), der jedem Ultraschallwandler zugeordnet ist, wobei jeder Kanal (11) eine Steuerschaltung (8) und einen Generator (7) eines Ansteuersignals des Ultraschallwandlers umfasst, das von einem von der Steuerschaltung (8) erzeugten Logik-Steuersignal steuerbar ist, um Spannungsimpulse mit einer Verzögerung gemäß dem Verzögerungsbefehl (Cd) und einer Modulation unter Verwendung eines Modulationssignals bereitzustellen, dessen Modulationsfrequenz, die mehrere Werte annehmen kann, durch den Modulationsbefehl (Cm) festgelegt ist;
- eine Ausgangsschnittstelle, die so konfiguriert ist, dass sie den Ultraschallwandlern (2) Ansteuersignale bereitstellt.

2. Steuereinheit nach Anspruch 1, umfassend eine einzige Modulationssignal-Generatorschaltung, die von dem Modulationsbefehl (Cm) gesteuert wird, so dass der Modulationsbefehl eine für die Anordnung der Ultraschallwandler gemeinsame Modulationsfrequenz festlegt.

3. Steuereinheit nach Anspruch 1, wobei die Ultraschallwandler in mehrere Ultraschallwandler-Unteranordnungen aufgeteilt sind und welche eine Modulationssignal-Generatorschaltung je Ultraschallwandler-Unteranordnung umfasst, so dass der Modulationsbefehl eine für die Wandler einer Unteranordnung gemeinsame Modulationsfrequenz festlegt.

4. Steuereinheit nach Anspruch 3, wobei jeder Kanal (11) eine Modulationssignal-Generatorschaltung umfasst.

5. Steuereinheit nach einem der Ansprüche 1 bis 4, wobei die jedem Ultraschallwandler zugeordnete Steuerschaltung so konfiguriert ist, dass sie das Logik-Steuersignal erzeugt, um eine Pulsweitenmodulation des Ansteuersignals des Ultraschallwandlers durchzuführen.

6. Steuereinheit nach Anspruch 5, wobei die Pulsweitenmodulation ein zyklisches Verhältnis des Ansteuersignals ausgehend von einer Amplitude des Modulationssignals steuert.

7. Steuereinheit nach Anspruch 6, wobei die Pulsweitenmodulation das zyklische Verhältnis des Ansteuersignals ausgehend von einer Amplitude des Modulationssignals bei einer steigenden Flanke des Ansteuersignals steuert.

8. Vorrichtung zum Erzeugen eines akustischen Feldes, das aus der Ferne eine taktile Empfindung bereitstellt, umfassend eine Steuereinheit nach einem der Ansprüche 1 bis 7 und einen Spannungswandler, der geeignet ist, Ansteuersignale in Signale mit einer höheren Spannung umzuwandeln.

9. System (1) zum Erzeugen einer taktilen Empfindung aus der Ferne, umfassend:
- eine Anordnung von Ultraschallwandlern (2);
- einen Detektor (5), der so konfiguriert ist, dass er die Position einer Oberfläche eines Benutzers, die taktil stimuliert werden soll, relativ zu den Wandlern erfasst;
- eine Datenverarbeitungseinheit (6), die so konfiguriert ist, dass sie in Abhängigkeit von der so erfassten Position der Oberfläche des Benutzers einen Verzögerungsbefehl und einen Modulationsbefehl erzeugt;
- eine Steuereinheit nach einem der Ansprüche 1 bis 7.

10. Verfahren zur Ansteuerung mittels einer Steuereinheit nach einem der Ansprüche 1 bis 7 einer Anordnung von Ultraschallwandlern (2), die geeignet ist, ein akustisches Feld zu erzeugen, das aus der Ferne eine taktile Empfindung bereitstellt, umfassend:
- das Empfangen, über die Eingangsschnittstelle der Steuereinheit, eines Verzögerungsbefehls (Cd) und eines Modulationsbefehls (Cm);
- das Erzeugen, durch jeden einem der Ultraschallwandler zugeordneten Kanal, eines Ansteuersignals des Wandlers in Form von Spannungsimpulsen, die eine Verzögerung gemäß dem Verzögerungsbefehl und eine Modulation unter Verwendung eines Modulationssignals, dessen Modulationsfrequenz, die mehrere Werte annehmen kann, durch den Modulationsbefehl festgelegt ist, aufweisen;
- das Bereitstellen, über die Ausgangsschnittstelle, von modulierten Ansteuersignalen an die Ultraschallwandler.

11. Computerprogrammprodukt, das Anweisungen umfasst, die, wenn das Programm von einem Computer ausgeführt wird, der die Steuereinheit der Ansprüche 1 bis 7 umfasst, diesen veranlassen, das Verfahren nach Anspruch 10 durchzuführen.

## Claims

1. A controller (3) for the control of a set of ultrasonic transducers (2) capable of generating an acoustic field providing a tactile sensation at a distance, comprising:
- an input interface configured to receive a delay command (Cd) and a modulation command (Cm);
- a channel (11) dedicated to each ultrasonic transducer, each channel (11) comprising a control circuit (8) and a generator (7) of a signal to drive the ultrasonic transducer capable of being controlled by a logic control signal generated by the control circuit (8) to deliver voltage pulses with a delay in accordance with the delay command (Cd) and a modulation utilising a modulating signal whose modulation frequency which may take several values is set by the modulation command (Cm);
- an output interface configured to supply the drive signals to the ultrasonic transducers (2).

2. A controller according to claim 1, comprising a single modulating signal generator circuit controlled by the modulation command (Cm) such that the modulation command sets a modulation frequency common to all the ultrasonic transducers.

3. A controller according to claim 1, in which the ultrasonic transducers are divided into several subsets of ultrasonic transducers and which comprises one modulating signal generator circuit per subset of ultrasonic transducers, such that the modulation command sets a common modulation frequency for the transducers in a subset.

4. A controller according to claim 3, in which each channel (11) comprises a modulating signal generator circuit.

5. A controller according to any one of claims 1 to 4, wherein the control circuit associated with each ultrasonic transducer is configured to generate the logic control signal so as to perform pulse width modulation of the ultrasonic transducer's drive signal.

6. A controller according to claim 5, wherein the pulse width modulation controls a duty cycle of the drive signal based on an amplitude of the modulating signal.

7. A controller according to claim 6, wherein the pulse width modulation controls the duty cycle of the drive signal based on an amplitude of the modulating signal during a rising edge of the drive signal.

8. A device for generating an acoustic field providing a remote tactile sensation, comprising a controller according to one of claims 1 to 7 and a voltage converter capable of converting the drive signals into signals of higher voltage.

9. A system (1) for providing a remote tactile sensation, comprising:
- a set of ultrasonic transducers (2);
- a sensor (5) configured to detect the position, relative to the transducers, of a user's surface to be stimulated tactilely;
- a data processing unit (6) configured to generate a delay command and a modulation command based on the position of the user's surface thus detected;
- a controller according to any one of claims 1 to 7.

10. A method of controlling, by means of a controller according to any one of claims 1 to 7, a set of ultrasonic transducers (2) capable of generating an acoustic field providing a tactile sensation at a distance, comprising:
- receiving, via the controller's input interface, a delay command (Cd) and a modulation command (Cm);
- generating, by each channel dedicated to one of the ultrasonic transducers, of a transducer drive signal in the form of voltage pulses having a delay in accordance with the delay command and a modulation utilising a modulating signal whose modulation frequency which may take several values is set by the modulation command;
- supplying by the output interface the modulated drive signals to the ultrasonic transducers.

11. A computer program product comprising instructions which, when the program is executed by a computer, including the controller of the claims 1 to 7, cause the computer to carry out the method according to claim 10.
